# EUROPÄISCHE PATENTSCHRIFT

(11) **EP 2 907 712 B1**
(45) Veröffentlichungstag und Bekanntmachung des Hinweises auf die Patenterteilung: **02.05.2018**
(21) Anmeldenummer: 14002820.0
(22) Anmeldetag: 13.08.2014
(51) Int. Cl.: B60T 13/26, B60G 11/30

(54) **Kraftfahrzeug, insbesondere Nutzfahrzeug, mit wenigstens einem Luftspeicherbehälter einer Luftversorgung**
Motor vehicle, in particular commercial vehicle, with at least one air storage container of an air supply
Véhicule, en particulier véhicule utilitaire, doté d'au moins un réservoir d'air d'une alimentation en air

(30) Priorität: 18.12.2013 AT 9652013
(43) Veröffentlichungstag der Anmeldung: 19.08.2015
(73) Patentinhaber: MAN Truck & Bus Österreich AG, 4400 Steyr (AT)
(72) Erfinder: Eibl, Thomas, 4400 Steyr (AT); Peitl, Manfred, 4441 Behamberg (AT)
(74) Vertreter: Liebl, Thomas

(56) Entgegenhaltungen:
- EP-A1- 2 876 352
- WO-A1-2013/094893
- DE-A1-102011 013 825
- DE-A1-102012 000 167
- US-A1- 2011 140 483

## Beschreibung

Die Erfindung betrifft ein Kraftfahrzeug, insbesondere Nutzfahrzeug, mit wenigstens einem Luftspeicherbehälter einer Luftversorgung nach dem Oberbegriff des Anspruchs 1.

Kraftfahrzeuge mit Luftspeicherbehältern für eine Luftversorgung sind allgemein bekannt. Insbesondere bei Nutzfahrzeugen, wie Lastkraftwagen, Bussen, Traktoren etc. wird eine Luftversorgung beispielsweise für Druckluftbremsen, für Luftfedern, für Ventile, etc. verwendet. Die dazu erforderliche Luft wird mit Kompressoren in Luftspeicherbehälter gefördert und gespeichert. Aus den Luftspeicherbehältern wird ventilgesteuert bei Bedarf Luft an angeschlossene Funktionselemente geleitet.

Bekannte Luftspeicherbehälter sind als Stahlkessel oder Aluminiumkessel fahrzeugindividuell im Chaussiebereich bzw. im Fahrzeugrahmen angeordnet. Solche Stahl- oder Aluminiumkessel haben eine relativ hohes Gewicht und erfordern zudem relativ viel Bauraum. Für verschiedene Fahrzeugtypen und Fahrzeugbaureihen sind unterschiedliche Ausführungen und unterschiedliche Montagepositionen erforderlich. Eine solche Typenvielfalt ist kostenintensiv hinsichtlich der Herstellung, der Logistik und der Montage.

Aus der nachveröffentlichten EP 2 876 352 A1 ist ein Druckgasbehälter bekannt, der an der Rückwand oder am Dachspoiler eines Nutzfahrzeugs angebracht ist.

Aufgabe der Erfindung ist es, ein Kraftfahrzeug, insbesondere ein Nutzfahrzeug, mit wenigstens einem Luftspeicherbehälter einer Luftversorgung so weiterzubilden, dass eine gewichtsgünstigere und bauraumgünstigere Lösung für den wenigstens einen Luftspeicherbehälter möglich ist.

Diese Aufgabe wird gelöst mit den Merkmalen des Anspruchs 1. Vorteilhafte Ausgestaltungen sind Gegenstand der darauf rückbezogenen Unteransprüche.

Erfindungsgemäß ist vorgesehen, dass der Luftspeicherbehälter durch wenigstens ein Luftkissen gebildet ist, das in einen Wandbereich des Fahrzeugaufbaus integriert ist, wobei für eine solche Integration eines oder mehrerer Luftkissen ein Aufnahmeraum zwischen einem Rohbau, insbesondere einem Blechaufbau als Rohbau, und einer Innenverkleidung verwendet ist. Dabei sind im Rohbau in der Regel ohnehin vorhandene oder gegebenenfalls vorzusehende Vertiefungen, insbesondere als flächige Taschen, zur Aufnahme von Luftkissen besonders geeignet.

Damit kann ein gewichts- und kostengünstiger sowie bauraumsparender Luftspeicherbehälter mit zusätzlicher Schall- und Wärmedämmfunktion realisiert werden.

In einer besonders bevorzugten Ausführungsform wird wenigstens ein solches Luftkissen in einer Kabinenrückwand und/oder in einer Kabinendachwand und/oder in einer Kabinenbodenwand einer Fahrerhauskabine eines Fahrzeugaufbaus integriert.

Ein solcher Aufnahmeraum für ein Luftkissen ist aufbaubedingt regelmäßig relativ großflächig und flach, sodass entsprechend auch ein dort anzubringendes Luftkissen flächig mit relativ geringer Höhe ausgebildet sein kann.

Ein so angeordnetes Luftkissen liegt zumindest mit einem Großteil seiner Wandflächen, vorzugsweise allseitig flächig integriert an den Wänden des Aufnahmeraums an. Beim Einbringen von Druckluft in ein solches Luftkissen werden dann flexible Luftkissenwände an den stabilen, begrenzenden Aufnahmeraumwänden abgestützt. Dickwandige, gewichtsintensive Behälterwände, wie sie bei den herkömmlichen Stahl- oder Aluminiumluftkesseln zur Aufnahme des Drucks erforderlich sind, können hier durch relativ dünne kostengünstig herstellbare und gewichtsgünstige Luftkissenwände ersetzt werden. Zudem wird durch den Wegfall solcher Luftkissen im Chassisbereich bzw. im Fahrzeugrahmenbereich Platz für andere Funktionselemente geschaffen.

Ein weiterer positiver Effekt solcher Luftkissen insbesondere in einer Fahrerhauskabine ist gegebenenfalls ein Beitrag zu einer verbesserten Geräusch- und/oder Wärmedämmung.

Bei einem Nutzfahrzeug mit einer Fahrerhauskabine kann in einer geeigneten Ausgestaltung ein relativ großflächiges mittleres Luftkissen unter einem Rückfenster in der Kabinenrückwand angeordnet sein. Zudem können einseitig oder beidseitig zu diesem mittleren Luftkissen jeweils zwei kleinere Luftkissen angeordnet sein, die seitlich neben einem Rückfenster liegen. Üblicherweise sind im Rohbau der Kabinenrückwand Konturen, zum Beispiel Blechkonturen, als Steher und Querträger eingeformt, die dann als ohnehin vorhandene Taschen für darin einliegende Luftkissen zur Verfügung stehen und verwendet werden können. So angebrachte Luftkissen sind dann lediglich noch durch eine Innenverkleidung abzudecken.

Weiter können gegebenenfalls Luftkissen in Freiräume im Dach und/oder im Boden einer Fahrerhauskabine integriert sein, wobei diese in ihrer Gestalt an dort vorhandene Aufnahmeräume angepasst werden. Beispielsweise kann im hinteren Dachbereich einer Fahrerhauskabine ein quer durchgehender Aufnahmeraum zur Aufnahme eines schlauchförmigen Luftkissens vorhanden sein oder geschaffen werden.

Wenn mehrere Luftkissen vorhanden sind, können davon zwei oder mehrere mit Rohren und/oder Schläuchen zu einem Luftspeicherbehälter als Bestandteil der Luftversorgung zusammengeschlossen werden. Dies kann gegebenenfalls auch in Verbindung mit herkömmlichen Luftspeicherkesseln erfolgen, wobei dann die Luftkissen ein zusätzliches Speichervolumen zusätzlich zu einem Luftspeicherkessel bilden.

Um gegebenenfalls eine Wärmedämmfunktion und/oder eine Schalldämmfunktion sowie ein Druckaufnahmeverhalten der Luftkissen zu verbessern können Wandflächen der Luftkissen zur Ausbildung kleinerer verbundener Kissenbereiche durch Stege oder Schottwände miteinander verbunden werden, wobei das Luftkissen insgesamt kostengünstig aus Kunststoffmaterial insbesondere aus Kunststofffolien hergestellt werden kann.

Anhand einer Zeichnung wird die Erfindung lediglich beispielhaft näher erläutert.

Es zeigen:
- Fig. 1: Eine perspektivische Ansicht eines Fahrerhausrohbaus schräg von vorn mit bereits angebrachten Luftkissen;
- Fig. 2: einen vertikalen Querschnitt durch den Fahrerhausrohbau nach Fig. 1 in Blickrichtung A auf die Fahrerhausrückwand;
- Fig. 3: eine Schnittdarstellung entsprechend Fig. 1 mit einem vertikalen Längsschnitt im Bereich seitlicher Luftkissen; und
- Fig. 4: eine Draufsicht auf die Kabinendachwand.

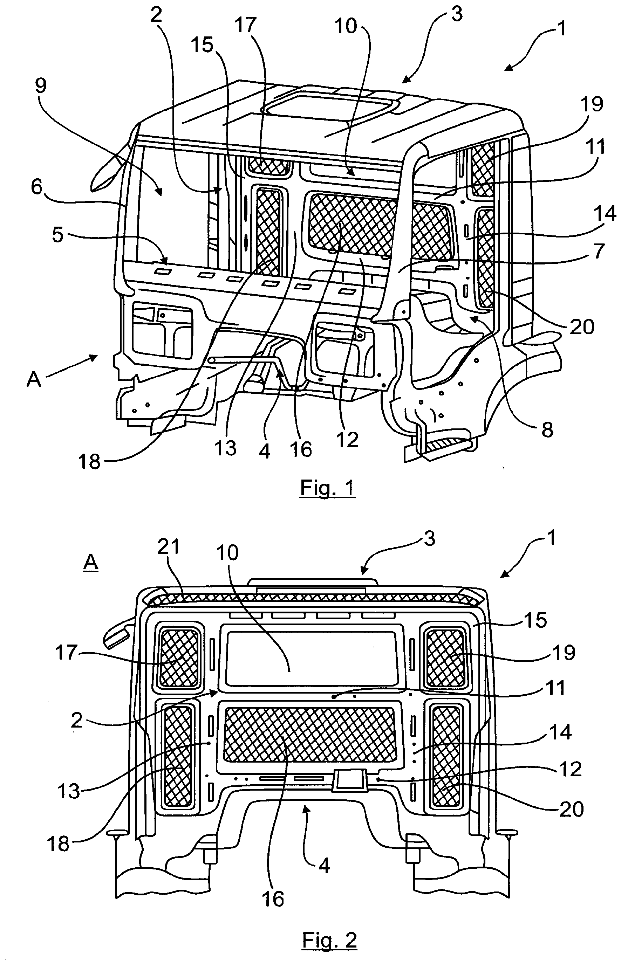

In Fig. 1 ist eine perspektivische Darstellung einer Fahrerhauskabine 1 eines Lastkraftwagens im Rohbau gezeigt, mit einer Kabinenrückwand 2, einer Kabinendachwand 3 und einer Kabinenbodenwand 4.

Der zum Beispiel als Blechrohbau ausgebildete Rohbau der Fahrerhauskabine 1 weist zudem einen vorderen Frontfensterausschnitt 5 mit zwei begrenzenden Fensterholmen 6 und 7, beidseitige Türausschnitte 8, 9 sowie einen Rückfensterausschnitt 10 auf.

Die Kabinenrückwand 2 des Rohbaus weist ersichtlich eine in den Kabineninnenraum vorragende Kontur, zum Beispiel Blechkontur, als Querträger 11, 12 und Steher 13, 14 zusammen mit einer umlaufenden Kontur bzw. Blechkontur 15 auf.

Dadurch ergeben sich von den Konturen 11 bis 15 begrenzte flächige Taschen in die unter dem Rückfensterausschnitt 10 ein relativ großflächiges mittleres Luftkissen 16 sowie jeweils seitlich dazu Luftkissen 17, 18, 19 und 20 flächig in den Taschen angeordnet sind. Zudem ist in einem Freiraum der Kabinendachwand weiter ein schlauchförmiges Luftkissen 21 (siehe Fig. 2 bis 4) angeordnet.

Die Luftkissen 16 bis 20 sind in ihrer Gestalt den jeweiligen Taschen angepasst und werden im Zuge der weiteren Montage durch Innenverkleidungselemente abgedeckt.

Die Luftkissen 16 bis 21 sind zumindest teilweise mit (nicht dargestellten) Rohren oder Schläuchen als Bestandteil einer Luftversorgung miteinander verbunden.

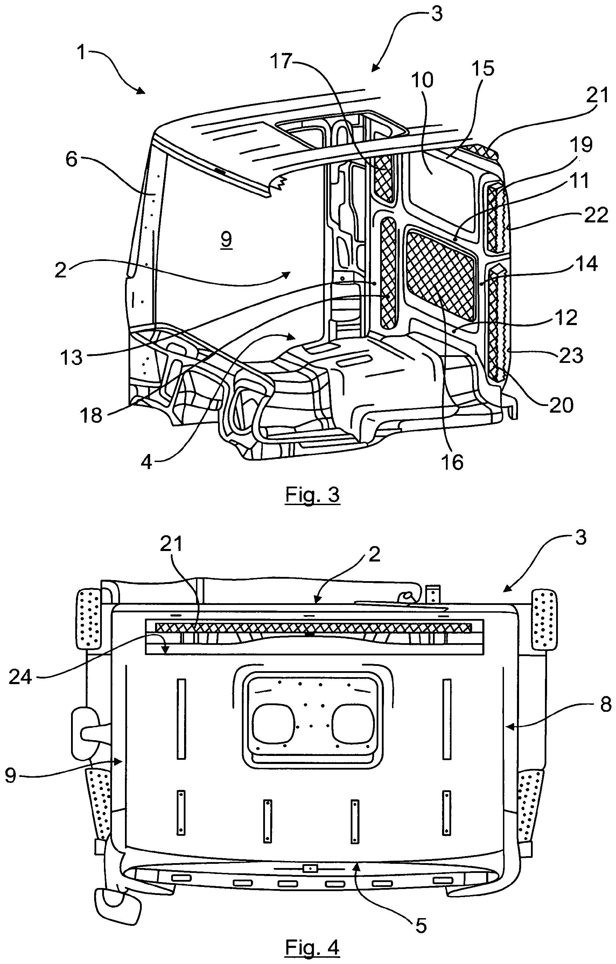

In vertikalem Querschnitt durch die Fahrerhauskabine mit Blick auf die Kabinenrückwand 2 ist die symmetrische Anordnung der hier beispielhaft fünf flächigen Luftkissen 16 bis 20 sowie die Anordnung eines weiteren Luftkissens 21 in einem Dachraum deutlich zu erkennen. In Fig. 3 ist ein vertikaler Längsschnitt im Bereich der seitlichen Luftkissen 19, 20 dargestellt. Daraus ist zu ersehen, wie diese in den durch die Blechkontur gebildeten zugeordneten Taschen 22, 23 flächig einliegen.

Aus der Draufsicht auf die Kabinendachwand 3 ist durch einen rückwärtigen Längsausschnitt 24 das im Wesentlichen über die ganze Quererstreckung verlaufende schlauchförmige Luftkissen 21 ersichtlich.

**Bezugszeichenliste**

| | | | |
|---|---|---|---|
| 1 | Fahrerhauskabine | 20 | Luftkissen |
| 2 | Kabinenrückwand | 21 | Luftkissen |
| 3 | Kabinendachwand | 22 | Taschen |
| 4 | Kabinenbodenwand | 23 | Taschen |
| 5 | Frontfensterausschnitt | 24 | Längsausschnitt |
| 6 | Fensterholm | | |
| 7 | Fensterholm | | |
| 8 | Türausschnitt | | |
| 9 | Türausschnitt | | |
| 10 | Rückfensterausschnitt | | |
| 11 | Querträger | | |
| 12 | Querträger | | |
| 13 | Steher | | |
| 14 | Steher | | |
| 15 | umlaufende Kontur | | |
| 16 | Luftkissen | | |
| 17 | Luftkissen | | |
| 18 | Luftkissen | | |
| 19 | Luftkissen | | |

## Patentansprüche

1. Kraftfahrzeug, insbesondere Nutzfahrzeug, mit wenigstens einem Luftspeicherbehälter einer Luftversorgung,
**dadurch gekennzeichnet,**
**dass** der Luftspeicherbehälter durch wenigstens ein Luftkissen (16 bis 21) gebildet ist, das in einen Wandbereich (2, 3, 4) des Fahrzeugaufbaus integriert ist, wobei für die Integration des wenigstens einen Luftkissens (16 bis 21) ein Aufnahmeraum zwischen einem Rohbau und einer Innenverkleidung verwendet ist.

2. Kraftfahrzeug nach Anspruch 1, **dadurch gekennzeichnet,**
**dass** der Fahrzeugaufbau eine Fahrerhauskabine (1) aufweist, wobei das wenigstens eine Luftkissen (16 bis 21) in die Kabinenrückwand (2) und/oder in die Kabinendachwand (3) und/oder in die Kabinenbodenwand (4) integriert ist.

3. Kraftfahrzeug nach Anspruch 1 oder 2, **dadurch gekennzeichnet,**
**dass** das wenigstens eine Luftkissen (16 bis 20) eine bezüglich der Längen- und Breitenabmessung definiert geringe Höhe aufweist und als flächiges Kissenelement zwischen dem Rohbau und der Innenverkleidung angeordnet ist.

4. Kraftfahrzeug nach Anspruch 3, **dadurch gekennzeichnet,**
**dass** im, insbesondere durch einen Blechaufbau ausgebildeten, Rohbau wenigstens eine Vertiefung, insbesondere wenigstens eine flächige Tasche (22, 23), zur Aufnahme eines Luftkissens (16 bis 20) ausgebildet und/oder vorgesehen ist.

5. Kraftfahrzeug nach einem der Ansprüche 2 bis 4, **dadurch gekennzeichnet,**
**dass** in der Kabinenrückwand zwischen, vorzugsweise durch Blech gebildeten, Konturen (11 bis 15) ein mittleres Luftkissen (16) unter einem Rückfensterausschnitt (5) angeordnet ist und seitlich des Rückenfensterausschnitts (5) und/oder des mittleren Luftkissens (16) wenigstens ein gegenüber dem mittleren Luftkissen (16) kleineres Luftkissen (17 bis 20), vorzugsweise beidseitig jeweils zwei kleinere Luftkissen (17 bis 20), angeordnet sind.

6. Kraftfahrzeug nach einem der Ansprüche 2 bis 5, **dadurch gekennzeichnet,**
**dass** in Freiräume der Kabinendachwand (3) und/oder der Kabinenbodenwand (4) an dort vorhandene Aufnahmeräume angepasste Luftkissen (21) integriert sind.

7. Kraftfahrzeug nach einem der vorhergehenden Ansprüche, **dadurch gekennzeichnet,**
**dass** wenigstens zwei Luftkissen (17 bis 21) mit Rohren und/oder Schläuchen zu einem Luftspeicherbehälter, gegebenenfalls in Verbindung mit herkömmlichen Luftspeicherkesseln, als Bestandteil der Luftversorgung zusammengeschlossen sind.

8. Kraftfahrzeug nach einem der vorhergehenden Ansprüche, **dadurch gekennzeichnet,**
**dass** das wenigstens eine Luftkissen (16 bis 21) so ausgebildet und/oder angeordnet ist, dass es eine Wärmedämm- und/oder Schalldämmfunktion aufweist.

## Claims

1. Motor vehicle, in particular commercial vehicle, having at least one air accumulator tank of an air supply,
**characterized**
**in that** the air accumulator tank is formed by way of at least one air cushion (16 to 21) which is integrated into a wall region (2, 3, 4) of the vehicle structure, a receiving space between a shell and an interior trim panel being used for the integration of the at least one air cushion (16 to 21).

2. Motor vehicle according to Claim 1, **characterized**
**in that** the vehicle structure has a driver's cab (1), the at least one air cushion (16 to 21) being integrated into the cab rear wall (2) and/or into the cab roof wall (3) and/or into the cab bottom wall (4).

3. Motor vehicle according to Claim 1 or 2, **characterized**
**in that** the at least one air cushion (16 to 20) has a lower height if defined with regard to the length and width dimensions, and is arranged as a flat cushion element between the shell and the interior trim panel.

4. Motor vehicle according to Claim 3, **characterized**
**in that** at least one depression, in particular at least one flat pocket (22, 23), for receiving an air cushion (16 to 20) is configured and/or provided in the shell which is configured, in particular, by way of a sheet metal superstructure.

5. Motor vehicle according to one of Claims 2 to 4, **characterized**
**in that** a middle air cushion (16) is arranged below a rear window cut-out (5) in the cab rear wall between contours (11 to 15) which are preferably formed by way of sheet metal, and at least one air cushion (17 to 20) which is smaller in comparison with the middle air cushion (16), preferably in each case two smaller air cushions (17 to 20) on both sides, is/are arranged to the side of the rear window cut-out (5) and/or the middle air cushion (16).

6. Motor vehicle according to one of Claims 2 to 5, **characterized**
**in that** air cushions (21) are integrated into clearances of the cab roof wall (3) and/or the cab bottom wall (4), which air cushions (21) are adapted to receiving spaces which are present there.

7. Motor vehicle according to one of the preceding claims, **characterized**
**in that** at least two air cushions (17 to 21) are combined by way of pipes and/or hoses to form an air accumulator tank, possibly in conjunction with conventional air accumulator vessels, as a constituent part of the air supply.

8. Motor vehicle according to one of the preceding claims, **characterized**
**in that** the at least one air cushion (16 to 21) is configured and/or arranged in such a way that it has a thermal insulation function and/or sound insulation function.

## Revendications

1. Véhicule automobile, en particulier véhicule utilitaire, comprenant au moins un réservoir d'air pour une alimentation en air,
**caractérisé en ce que**
le réservoir d'air est formé par au moins un coussin d'air (16 à 21) qui est intégré dans une région de paroi (2, 3, 4) de la carrosserie du véhicule, un espace de réception entre la caisse brute et un habillage interne étant utilisé pour l'intégration de l'au moins un coussin d'air (16 à 21).

2. Véhicule automobile selon la revendication 1, **caractérisé en ce que**
la carrosserie du véhicule présente une cabine de conducteur (1), l'au moins un coussin d'air (16 à 21) étant intégré dans la paroi arrière de la cabine (2) et/ou dans la paroi du toit de la cabine (3) et/ou dans la paroi du plancher de la cabine (4).

3. Véhicule automobile selon la revendication 1 ou 2, **caractérisé en ce que**
l'au moins un coussin d'air (16 à 20) présente une faible hauteur définie par rapport aux dimensions en longueur et en largeur et est disposé en tant qu'élément de coussin plat entre la caisse brute et l'habillage interne.

4. Véhicule automobile selon la revendication 3, **caractérisé en ce que**
dans la caisse brute réalisée notamment par une structure en tôle, est réalisé et/ou prévu au moins un renfoncement, en particulier au moins une poche plate (22, 23) pour recevoir un coussin d'air (16 à 20).

5. Véhicule automobile selon l'une quelconque des revendications 2 à 4, **caractérisé en ce que**
dans la paroi arrière de la cabine, entre des contours (11 à 15) formés de préférence en tôle, est disposé un coussin d'air central (16) sous une découpe de fenêtre arrière (5) et latéralement à la découpe de fenêtre arrière (5) et/ou au coussin d'air central (16) sont disposés au moins un coussin d'air plus petit (17 à 20), de préférence à chaque fois de chaque côté, deux coussins d'air (17 à 20) plus petits, par rapport au coussin d'air central (16).

6. Véhicule automobile selon l'une quelconque des revendications 2 à 5, **caractérisé en ce que**
dans des espaces libres de la paroi du toit de la cabine (3) et/ou de la paroi du plancher de la cabine (4), sont intégrés des coussins d'air (21) adaptés à des espaces de réception s'y trouvant.

7. Véhicule automobile selon l'une quelconque des revendications précédentes, **caractérisé en ce qu'**au moins deux coussins d'air (17 à 21) sont réunis avec des tubes et/ou des tuyaux pour former un réservoir d'air, éventuellement en association avec des récipients de stockage d'air usuels, en tant que constituant de l'alimentation en air.

8. Véhicule automobile selon l'une quelconque des revendications précédentes, **caractérisé en ce que**
l'au moins un coussin d'air (16 à 21) est réalisé et/ou disposé de telle sorte qu'il présente une fonction d'isolation thermique et/ou d'isolation sonore.
